Europäisches Patentamt

European Patent Office

Office européen des brevets

(11) Publication number: **0 082 130**
**A1**

# EUROPEAN PATENT APPLICATION

(21) Application number: **82870072.4**

(22) Date of filing: **14.12.82**

(51) Int. Cl.³: **C 04 B 13/00**, C 04 B 25/00,
C 04 B 31/34, C 08 L 95/00

(30) Priority: **15.12.81 BE 206837**

(43) Date of publication of application: **22.06.83**
**Bulletin 83/25**

(84) Designated Contracting States: **CH DE FR LI LU NL**

(71) Applicant: **Vanherk, Jozef, Lindestraat 12, B-3582 St. Huibrechts (BE)**
Applicant: **Frederix, Yvon, Lindelsebaan 76, B-3583 Overpelt (BE)**

(72) Inventor: **Vanherk, Jozef, Lindestraat 12, B-3582 St. Huibrechts (BE)**
Inventor: **Frederix, Yvon, Lindelsebaan 76, B-3583 Overpelt (BE)**

(74) Representative: **Pieraerts, Jacques, Bureau Gevers S.A. rue de Livourne 7, Bte. 1, B-1050 Bruxelles (BE)**

(54) Composition for preparing cement concrete as well as asphalt concrete.

(57) The invention relates to a composition for preparing cement concrete as well as asphalt concrete, which, besides the components of both concrete kinds, further comprise at least one from the following additives:

    a) natural stones,

    b) synthetic materials such as one or more of the following components: foam ashes, furnace slags, expanded clay, sintered fly ashes, and expanded schists,

    c) synthetic fibers.

EP 0 082 130 A1

"Composition for preparing cement concrete as well as asphalt concrete".

This invention pertains to a composition for preparing cement concrete as well as asphalt concrete with new and original features.

The object of the invention is to provide a composition which is usable for preparing the most varied concrete products or structures.

It is mostly tried to obtain an improvement in the following properties of concrete products :

1. Increasing the bending stress ;

2. Reducing to a negligible value the shrinkage;

3. Increasing the pressure resistance;

4. Increasing the shear stress and the ultimate stress;

5. Reducing to unconsequent values those distortions due to temperature changes.

To obtain such results according to the invention, the composition to be used both for cement concrete and asphalt concrete, besides the components of both said concrete kinds, further comprises at least one from the following additives:

a) natural stones,

b) synthetic materials such as one or more of the following components; foam ashes, furnace slags, expanded clay, sintered fly ashes, and expanded schists,

c) synthetic fibers.

According to the invention said natural stones are comprised of one or more of the following components: igneous rocks, stratified stones, and metamorphous stones.

Advantageously, said fibers are comprised of polyester fibers, acrylic fibers, obtained by polycondensing a basic acid and a diol, or by self-condensing a hydroxy-acid.

Preferably, the length of said fibers lies between 0.5 and 10 cm, and the thickness thereof is approximately 1 D'Tex.

Other details and features of the invention will stand out from the following description, given by way of non limitative example, of a composition for preparing both cement concrete and asphalt concrete.

Concrete products or concrete structures for which the composition according to the invention may be considered, are building blocks, slabs, and any element which can be manufactured generally in the building industry or building trade on the basis of cement concrete or asphalt concrete. This does include naturally also road building and public works generally.

The composition is thus usable for cement concrete and asphalt concrete, and comprises for both concrete kinds, in arbitrary ratio :

sand, gravel and broken stones, or one such components. For cement concrete, use is made originally
of the usual ratios of cement and water. For asphalt concrete, use is made originally of bitumen
with strong binding properties.

To the above-mentioned compositions
are added fibers.

With the wording "fibers" there is meant
here :

a) polyester fibers,

b) acrylic fibers.

Acrylic fibers are obtained by polycondensing of a dibasic acid. with a diol or by
self-condensing of hydroxy-acid with spinning of
the melt.

Fibers which satisfy particularly well
the required properties of the end product have
a thickness which lies between 1 D'Tex and 15 D'Tex.

The length of said fibers, whatever
group they might belong to, lies between 0.5 and
10 cm.

With such compositions, when starting
from cement concrete or asphalt concrete, there are
obtained any end products whatsoever, with any
shape whatsoever, the resistance of which is markedly higher and sometimes twice as high, while
bending stress, shear stress and ultimate stress
are substantially increased and the . shrinkage is
nearly lowered to zero.

It is also determined that with substantial temperature changes, the distortion is to

be considered as negligible.

All such properties lie even higher than usual with a lowering of the concrete volume.

This means that the concrete as referred to the volume thereof, may be reduced while retaining the above-mentioned properties.

It is clear that the composition according to the invention is adapted to the most varied presently known uses. Shaped parts are to be pressed and vibrated due to the presence of the fibers. Compacting of the concrete mass wherein fibres comprise 0.1 to 10% by weight is a necessary requirement.

It must be understood that the invention is in no way limited to the above embodiments and that many changes may be brought thereto, without departing from the scope of the invention as defined by the appended claims.

## CLAIMS.

1. Composition for preparing cement concrete as well as asphalt concrete, characterized in that, besides the components of both concrete kinds, it further comprises at least one from the following additives :

a) natural stones,

b) synthetic materials such as one or more of the following components : foam ashes, furnace slags, expanded clay, sintered fly ashes, and expanded schists,

c) synthetic fibers.

2. Composition as defined in claim 1, characterized in that said natural stones are comprised of one or more of the following components : igneous rocks, stratified stones, and metamorphous stones.

3. Composition as defined in either one of claims 1 and 2, characterized in that said synthetic fibers are comprised of polyester fibers.

4. Composition as defined in either one of claims 1 and 2, characterized in that said synthetic fibers are comprised of acrylic fibers which are obtained by polycondensing a dibasic acid and a diol, or by self-condensing of hydroxy-acid, with spinning of the melt.

5. Composition as defined in either one of claims 3 and 4, characterized in that the length of said fibers lies between 0.5 and 10 cm.

6. Composition as defined in claim 5, characterized in that the thickness of said fibers reaches at least 1 D'Tex.

7. Composition as defined in any one of claims 1 to 6, characterized in that said fibers are present with a ratio of 0.1 to 10% by weight.

8. Method for producing concrete products on the basis of a composition as defined in any one of claims 1-7, which comprises vibrating the concrete kind in the required mould.

9. Method as defined in any one of claims 1-8, which comprises pressing said concrete kind to shaped parts.

10. Method as defined in any one of claims 1-9, characterized in that said concrete kind is poured.

11. Method as defined in any one of claims 1-10, characterized in that said concrete kind is sprayed.

# EUROPEAN SEARCH REPORT

0082130

Application number.

EP 82 87 0072

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | C 04 B 13/00 |
| X | US-A-3 899 344 (G.R.JAKEL) | 1-3,5, 7-9 | C 04 B 25/00 |
| | *Column 1, lines 50-59; column 4, lines 1-3,17-22; claim 1* | | C 04 B 31/34 |
| | | | C 08 L 95/00 |
| | --- | | |
| X | US-A-3 645 961 (S.GOLDFEIN) | 1,2,5, 7 | |
| | *Claim 1; column 2, lines 26-31,45-48* | | |
| | --- | | |
| X | NL-A-7 500 051 (CAPE BOARDS AND PANELS) | 1-3,7, 9 | |
| | *Claims 1,3,8; page 3, lines 5-14,31* | | |
| | --- | | |
| X | FR-A-1 525 901 (CHEM. WERKE WORMS-WEINSHEIM) | 1,3,5, 11 | TECHNICAL FIELDS SEARCHED (Int. Cl. ³) |
| | *Page 1, right-hand column, lines 28-32; page 2, left-hand column, lines 43-46* | | |
| | --- | | C 04 B 31/00 |
| X | US-A-3 753 938 (R.M.EDWARDS et al.) | 1-4 | C 04 B 13/00 |
| | *Column 3, lines 14-16; column 5, lines 15-31* | | C 04 B 25/00 |
| | | | C 08 L 95/00 |
| | --- | | |
| X | US-A-3 505 260 (G.N.WOODRUFF) | 1,11 | |
| | *Claim 1; column 2, lines 49-51* | | |
| | --- -/- | | |

The present search report has been drawn up for all claims

| Place of search THE HAGUE | Date of completion of the search 03-03-1983 | Examiner DAELEMAN P.C.A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

**European Patent Office**

## EUROPEAN SEARCH REPORT

Application number

EP 82 87 0072

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 703 342 (VEREINIGTE STEINWERKE) *Claims 1,2,3,7; page 10, line 31 - page 11, line 6; page 12, lines 21-25* | 1-4,7 11 | |
| X | US-A-3 213 167 (H.T.STIRLING) *Claim 1* | 1 | |

TECHNICAL FIELDS SEARCHED (Int. Cl. ³)

The present search report has been drawn up for all claims

| Place of search THE HAGUE | Date of completion of the search 03-03-1983 | Examiner DAELEMAN P.C.A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82